# EUROPÄISCHE PATENTSCHRIFT

(11) **EP 3 543 204 B1**
(45) Veröffentlichungstag und Bekanntmachung des Hinweises auf die Patenterteilung: **01.02.2023**
(21) Anmeldenummer: 19159262.5
(22) Anmeldetag: 26.02.2019
(51) Int. Cl.: B66F 17/00

(54) **VERFAHREN ZUM BETREIBEN EINES FLURFÖRDERZEUGS**
METHOD FOR OPERATING AN INDUSTRIAL TRUCK
PROCÉDÉ DE FONCTIONNEMENT D'UN CHARIOT DE MANUTENTION

(30) Priorität: 05.03.2018 DE 102018104986
(43) Veröffentlichungstag der Anmeldung: 25.09.2019
(73) Patentinhaber: Jungheinrich Aktiengesellschaft, 22047 Hamburg (DE)
(72) Erfinder: Grabbe, Florian, 22335 Hamburg (DE); Ahrens, Stefan, 25462 Rellingen (DE); Heise, Sven-Ole, 24783 Osterrönfeld (DE); Kopelke, Jan, 22337 Hamburg (DE); Altmann, Tony, 24616 Brokstedt (DE)
(74) Vertreter: Seemann & Partner Patentanwälte mbB

(56) Entgegenhaltungen:
- WO-A2-2015/121818
- US-A1- 2011 093 134
- US-A1- 2014 159 888
- US-A1- 2018 059 682

## Beschreibung

Die Erfindung betrifft ein Verfahren zum Betreiben eines Flurförderzeugs in einer Warenlogistikeinrichtung.

Im Stand der Technik ist bekannt, dass Flurförderzeuge in Logistikeinrichtungen, wie zum Beispiel Warenlagern oder Regallagern für Güter und Waren, mit möglichst hoher Geschwindigkeit bewegt werden, um die Güter und Waren auf schnelle sowie effiziente Weise von bzw. zu ihren Lagerstellen zu transportieren. In der Regel werden hierbei verschiedene Flurförderzeuge eingesetzt, die vom Bedienpersonal bzw. von einem Fahrer oder automatisch, zum Beispiel durch Verwendung von Induktionsschleifen oder dergleichen, geführt werden.

Um beispielsweise einen Fahrer eines Flurförderzeugs bei der Handhabung des Flurförderzeugs zu unterstützen, ist in EP 1 767 488 A2 ein System zur Unterstützung eines Fahrers eines Flurförderzeugs während der Fahrt offenbart.

Um die Flurförderzeuge zu führen, werden auch Fahrerassistenzsysteme auf oder in den Flurförderzeugen eingesetzt, wodurch das Flurförderzeug beeinflusst wird oder der Fahrer informiert wird, wenn beispielsweise in einem gefährdeten Bereich langsamer gefahren werden soll oder auf bestimmten Flächen oder in bestimmten Bereichen keine Ware abgelegt werden soll. Derartige Einschränkungen in der Führung der Flurförderzeuge sind jeweils lokal begrenzt und betreffen dementsprechend nur einzelne Zonen innerhalb einer Warenlogistikeinrichtung.

In WO 2015/121818 A2 ist ein Sicherheitssystem zur Kollisionsvermeidung offenbart, wobei auf einem selbstfahrenden Fahrzeug, wie z.B. einem Flurförderzeug, eine zentrale Steuereinheit mit wenigstens einem oder mehreren Sensoren vorgesehen sind. WO 2015/121818 A2 offenbart ein Verfahren gemäß dem Oberbegriff des unabhängigen Anspruchs 1.

Ferner sind in US 2011/0093134 A1 ein Verfahren und eine Vorrichtung zum Vermeiden von Kollisionen von sich bewegenden Fahrzeugen, wie z.B. Flurförderzeugen, beschrieben. Die Fahrzeuge können sowohl bemannt als auch unbemannt sein.

Darüber hinaus offenbart US 2018/0059682 A1 ein Materialtransportfahrzeug, wie z.B. ein Flurförderzeug. Das Flurförderzeug weist ein Lokalisierungsmodul sowie ein Navigationsmodul auf, die zusammenarbeiten.

Außerdem offenbart US 2014/0159888 A1 ein Warnsystem, um in Echtzeit personalisierte Warnmeldungen für Fahrer von Fahrzeugen, wie z.B. einem Flurförderzeug, sowie Fußgänger bereitzustellen, die sich in einem Gefahrenbereich befinden.

Die Aufgabe der Erfindung besteht darin, die Handhabung eines Flurförderzeugs in einer Warenlogistikeinrichtung zu verbessern.

Gelöst wird diese Aufgabe durch ein Verfahren zum Betreiben eines Flurförderzeugs in einer Warenlogistikeinrichtung, wobei die absolute Position des Flurförderzeugs innerhalb der Warenlogistikeinrichtung ermittelt wird oder ist und wobei die Fahrausrichtung des Flurförderzeugs innerhalb der Warenlogistikeinrichtung ermittelt wird oder ist, wobei in Abhängigkeit der ermittelten absoluten Position und der ermittelten Fahrausrichtung des Flurförderzeugs innerhalb der Warenlogistikeinrichtung eine dynamisch anpassbare und/oder veränderbare Flurförderzeug-Erweiterungszone, vorzugsweise in vorbestimmten Zeitdauern, bestimmt wird, das dadurch weitergebildet wird, dass nach Bestimmung der Flurförderzeug-Erweiterungszone Daten der Flurförderzeug-Erweiterungszone von dem Flurförderzeug an ein weiteres Flurförderzeug, vorzugsweise drahtlos, und/oder an eine, vorzugsweise zentrale, Steuereinrichtung der Warenlogistikeinrichtung, vorzugsweise drahtlos, übermittelt werden.

Die Erfindung beruht auf dem Gedanken, dass für ein Flurförderzeug eine virtuelle Flurförderzeug-Erweiterungszone bestimmt oder berechnet wird, wobei insbesondere die Flurförderzeug-Erweiterungszone in Abhängigkeit des Fahrzeugzustands und/oder in Abhängigkeit der Fahrdynamik des Flurförderzeugs die Flurförderzeug-Erweiterungszone veränderbar ist. Beispielsweise ist bei einem stehenden Fahrzeug die Flurförderzeug-Erweiterungszone am kleinsten und verläuft in einem kurzen Abstand parallel zu einer Umrisslinie des Flurförderzeugs auf dem Boden der Warenlogistikeinrichtung. Durch die Flurförderzeug-Erweiterungszone wird eine Zone ermittelt, die je nach Bewegungszustand des Flurförderzeugs den Bereich angibt, in dem sich das Flurförderzeug aufgrund der Bewegungsrichtung und der Bewegungsart bewegen wird, wobei hierdurch eine Art Schutzzone für das Flurförderzeug bestimmt wird, um Kollisionen mit einem weiteren Flurförderzeug zu vermeiden.

Ein weiterer Vorteil der Erfindung besteht darin, dass die Flurförderzeug-Erweiterungszone für ein Flurförderzeug unter Berücksichtigung von, vorzugsweise ortsfesten, Hindernissen in der Warenlogistikeinrichtung bestimmt wird, da dadurch die Flurförderzeug-Erweiterungszone auch für den Teilbereich, der vom Flurförderzeug aus gesehen hinter dem Hindernis abgeschattet oder verdeckt ist, bestimmt wird. Dadurch wird die Flurförderzeug-Erweiterungszone für das Flurförderzeug auch unter Einbeziehung des vom Hindernis verdeckten Teilbereichs bestimmt.

Insbesondere wird die spezifische Flurförderzeug-Erweiterungszone um das jeweilige Flurförderzeug anhand der absoluten Position innerhalb der Warenlogistikeinrichtung, zum Beispiel einer Lagerhalle oder dergleichen, sowie der Fahrausrichtung, d.h. Orientierung bzw. Lage des Flurförderzeugs innerhalb der Warenlogistikeinrichtung, ermittelt. Um die absolute Position und Fahrausrichtung innerhalb der Warenlogistikeinrichtung zu ermitteln, sind in der Warenlogistikeinrichtung entsprechende, vorzugsweise ortsfeste, Sende- und Empfangsvorrichtungen, wie z.B. Ankerknoten oder dergleichen, sowie gegebenenfalls Ortungsvorrichtungen vorgesehen, um die absolute Position des Flurförderzeugs sowie deren Fahrausrichtung bzw. Orientierung zu ermitteln. Dies erfolgt vorzugsweise in regelmäßigen Zeitabständen.

Um die absolute Position des oder eines Flurförderzeugs zu bestimmen, sind gemäß einer Ausgestaltung beispielsweise in der Warenlogistikeinrichtung eine Mehrzahl von fest installierten Ankerknoten vorhanden, die Referenzpunkte in einem gemeinsamen Koordinatensystem darstellen. Durch ein Ortungssystem wird die Position des jeweiligen Flurförderzeugs in dem Koordinatensystem durch Abstandsmessungen zu mehreren Ankerknoten bestimmt.

Zur Positionsbestimmung wird ein fest installiertes Netz von Referenzpunkten, beispielsweise WLAN-Zugangspunkte oder dergleichen, eingesetzt. Die Positionsbestimmung sowie die Ausrichtung eines Flurförderzeugs in der Warenlogistikeinrichtung erfolgt beispielsweise durch Lateration, also einer Entfernungs- bzw. Abstandsmessung zu drei verschiedenen Punkten, in diesem Fall den Referenzpunkten des Systems. Die Entfernungs- oder Abstandsmessung erfolgt beispielsweise mit Hilfe einer Laufzeitmessung. Die Referenzpunkte sollen als Ankerknoten bezeichnet werden. Ihre als bekannt vorausgesetzten Positionen dienen als Referenzpunkte in einem gemeinsamen Koordinatensystem. Die Ankerknoten werden also in einem gemeinsamen Koordinatensystem dargestellt bzw. referenziert. Damit die als Referenzpunkte verwendeten Ankerknoten auch als Fixpunkte für die Bestimmung eines absoluten Ortes in dem gemeinsamen Koordinatensystem dienen können, werden die Positionen der Ankerknoten bestimmt oder sind bekannt.

Dazu ist gemäß einer Weiterbildung des Verfahrens vorgesehen, dass in Abhängigkeit der, vorzugsweise aktuellen, Fahrgeschwindigkeit des Flurförderzeugs die Flurförderzeug-Erweiterungszone bestimmt wird. Dadurch ist es möglich, dass beispielsweise bei einer Erhöhung der Fahrgeschwindigkeit sich die Flurförderzeug-Erweiterungszone in Bewegungsrichtung des Flurförderzeugs vergrößert, während bei einer Verringerung der Fahrgeschwindigkeit des Flurförderzeugs die Flurförderzeug-Erweiterungszone in Bezug auf die Fahrrichtung des Flurförderzeugs verringert wird. Im Stillstand des Flurförderzeugs ist die Flurförderzeug-Erweiterungszone am kleinsten.

Überdies ist gemäß einem weiteren Aspekt des Verfahrens vorgesehen, dass in Abhängigkeit der Fahrtrichtung und/oder der Bewegungsbahn des Flurförderzeugs die Flurförderzeug-Erweiterungszone bestimmt wird. Dadurch wird die Flurförderzeug-Erweiterungszone beispielsweise bei Kurvenfahrten des Flurförderzeugs entsprechend angepasst, wobei hierbei bei der Ermittlung der Flurförderzeug-Erweiterungszone eine zukünftige Position des Flurförderzeugs berücksichtigt wird, wobei in Abhängigkeit der Geschwindigkeit des Flurförderzeugs beispielsweise auch der Lenkeinschlag oder gegebenenfalls die Drehrate des Flurförderzeugs berücksichtigt wird.

Darüber hinaus wird es unter Verwendung der Flurförderzeug-Erweiterungszone ermöglicht, dass in einer Warenlogistikeinrichtung die Flurförderzeuge auch bei einem dichten Abstand kollisionsfrei aneinander vorbeifahren können.

Vorzugsweise wird gemäß einem weiteren Aspekt in Abhängigkeit des Fahrzeugtyps des Flurförderzeugs die Flurförderzeug-Erweiterungszone bestimmt. Hierbei kann bei der Bestimmung der Flurförderzeug-Erweiterungszone beispielsweise berücksichtigt werden, dass es sich bei dem Flurförderzeug um einen Gegengewichtstapler, einen Kommissionsstapler, einen Schlepper, einen Schubmaststapler, einen Schmalgangstapler, einen Schwerlaststapler, einen Seitenstapler oder dergleichen handelt. Je nach Fahrzeugtyp werden hierbei in Abhängigkeit von der Außenkontur des jeweiligen Flurförderzeugs entsprechende, spezifische Flurförderzeug-Erweiterungszonen bestimmt. Auch kann hierbei die Antriebsart des Fahrzeugtyps, zum Beispiel Elektroantrieb etc., berücksichtigt werden.

Überdies ist gemäß einer bevorzugten Ausführungsform des Verfahrens vorgesehen, dass in Abhängigkeit der Fahrzeugeigenschaften des Flurförderzeugs und/oder in Abhängigkeit von einer oder mehreren Eigenschaften von einer an das Flurförderzeug angebauten Anbauvorrichtung die Flurförderzeug-Erweiterungszone bestimmt wird. Wird beispielsweise eine Anbauvorrichtung, wie zum Beispiel ein Ballengreifer, an das Flurförderzeug angebracht, so wird unter Berücksichtigung der Kontur der Anbauvorrichtung die spezifische Flurförderzeug-Erweiterungszone gegenüber dem Flurförderzeug ohne Anbaugerät erweitert bzw. vergrößert oder angepasst. Hierdurch wird entsprechend die Flurförderzeug-Erweiterungszone je nach Anbauvorrichtung modifiziert.

Vorzugsweise ist gemäß einem weiteren Aspekt des Verfahrens vorgesehen, dass in Abhängigkeit der Fahrqualifikation eines Fahrers des Flurförderzeugs die Flurförderzeug-Erweiterungszone bestimmt wird. Hierbei ist es möglich, dass die Flurförderzeug-Erweiterungszone personenabhängig modifiziert wird oder angepasst wird, wobei es möglich ist, zum Beispiel bei einem erfahrenen Fahrer des Flurförderzeugs die Flurförderzeug-Erweiterungszone kleiner auszubilden im Vergleich zu einem Fahrer mit weniger Erfahrung in der Handhabung des Flurförderzeugs, bei dem entsprechend die Flurförderzeug-Erweiterungszone vergrößert ist.

Außerdem zeichnet sich eine Ausgestaltung des Verfahrens dadurch aus, dass in Abhängigkeit der Eigenschaften, insbesondere Typ und/oder Gewicht und/oder Größe, einer mittels des Flurförderzeugs zu transportierenden oder transportierten Ware die Flurförderzeug-Erweiterungszone bestimmt wird. Dadurch wird ermöglicht, dass in Abhängigkeit beispielsweise des Gewichts oder anderer physikalischer Eigenschaften der Ware für das Flurförderzeug die Flurförderzeug-Erweiterungszone bestimmt wird. Beispielsweise wird die Flurförderzeug-Erweiterungszone in Förderrichtung bei einer schweren Last, zum Beispiel auf den Gabeln des Flurförderzeugs, verlängert, wodurch unter Verwendung der erweiterten bzw. vergrößerten Flurförderzeug-Erweiterungszone die Möglichkeit einer Kollision mit einem weiteren Fahrzeug oder eine andere Gefahrensituation vorzeitig oder rechtzeitig erkannt wird. Ist ferner das Flurförderzeug als Schlepper oder Zugmaschine ausgebildet, kann hierbei die Flurförderzeug-Erweiterungszone ebenfalls entsprechend angepasst werden, da beispielsweise die Anzahl und/oder die Art der Anhänger bei der Bestimmung der Flurförderzeug-Erweiterungszone berücksichtigt wird. Auch kann in Abhängigkeit der Länge oder der Größe der Ware, zum Beispiel bei Langgut, durch einen Mehrwegestapler, insbesondere Elektro-Mehrwegestapler, die Flurförderzeug-Erweiterungszone bestimmt werden.

Ferner ist es gemäß einem weiteren Aspekt des Verfahrens vorgesehen, dass in Abhängigkeit der Einsatzzeit des Flurförderzeugs in der Warenlogistikeinrichtung die Flurförderzeug-Erweiterungszone bestimmt wird. Wird beispielsweise ein Flurförderzeug in einem Mehrschichtsystem in der Warenlogistikeinrichtung eingesetzt, so kann zu Zeiten, in denen mit einem erhöhten Personenaufkommen zu rechnen ist, beispielsweise vor oder nach einer Pause oder bei einem Personalschichtwechsel, die Flurförderzeug-Erweiterungszone entsprechend angepasst werden, da in diesen Zeiten mit einem erhöhten Personenaufkommen innerhalb der Warenlogistikeinrichtung zu rechnen ist. In diesem Fall ist die Flurförderzeug-Erweiterungszone vorzugsweise vergrößert im Vergleich zu den anderen Zeiten.

Außerdem ist es bei einer Ausgestaltung des Verfahrens vorteilhaft, dass in Abhängigkeit der für das Flurförderzeug befahrbaren Umgebung der Warenlogistikeinrichtung und/oder in Abhängigkeit der Verkehrsdichte von Flurförderzeugen in einem Bereich der Warenlogistikeinrichtung die Flurförderzeug-Erweiterungszone bestimmt wird. Ist beispielsweise das Flurförderzeug bzw. die Steuereinrichtung des Flurförderzeugs mit einer zentralen Steuereinrichtung der Warenlogistikeinrichtung, zum Beispiel einem Waren-Management-System, verbunden, so können von der zentralen Steuereinrichtung der Warenlogistikeinrichtung entsprechende Informationen und Daten an das Flurförderzeug übermittelt werden, wie viele Flurförderzeug sich im Bereich der Warenlogistikeinrichtung befinden. Hierbei kann in Abhängigkeit der Anzahl der Flurförderzeuge in einem vorbestimmten Bereich der Warenlogistikeinrichtung die Flurförderzeug-Erweiterungszone der einzelnen Flurförderzeuge entsprechend spezifisch angepasst werden.

Ferner ist es im Rahmen der Erfindung möglich, dass festgestellt wird, ob ein Flurförderzeug im Außenbereich oder in einem Innenbereich der Warenlogistikeinrichtung eingesetzt wird, so dass beispielsweise bei Einsatz des Flurförderzeugs in einem Innenbereich sich die Flurförderzeug-Erweiterungszone unterscheidet von der Flurförderzeug-Erweiterungszone eines anderen Flurförderzeugs im Außenbereich der Warenlogistikeinrichtung. Hierbei kann, je nachdem, ob das Flurförderzeug im Außenbereich oder im Innenbereich der Warenlogistikeinrichtung eingesetzt wird, die Flurförderzeug-Erweiterungszone in Abhängigkeit der für das Flurförderzeug befahrbaren Umgebung, insbesondere Außenbereich oder Innenbereich, bestimmt werden. Dadurch wird eine umgebungsabhängige Bestimmung der Flurförderzeug-Erweiterungszone erreicht, wodurch die Effizienz im Einsatz der Flurförderzeuge erhöht wird. Wird ein Flurförderzeug im Außenbereich der Warenlogistikeinrichtung eingesetzt, so kann unter Verwendung einer weiteren Sensorik, wie zum Beispiel einer satellitengeschützten Positionsbestimmung oder dergleichen, die Position des Flurförderzeugs im Außenbereich der Warenlogistikeinrichtung bestimmt werden, wobei hierzu entsprechend auch die Flurförderzeug-Erweiterungszone des Flurförderzeugs bestimmt wird.

Außerdem ist es bei dem Verfahren bevorzugt, dass in, vorzugsweise regelmäßigen, Zeitintervallen die absolute Position des Flurförderzeugs innerhalb der Warenlogistikeinrichtung und/oder die Fahrausrichtung des Flurförderzeugs innerhalb der Warenlogistikeinrichtung ermittelt und/oder überprüft wird. Dies erfolgt vorzugsweise automatisch.

Dadurch, dass nach Bestimmung der Flurförderzeug-Erweiterungszone Daten der Flurförderzeug-Erweiterungszone von dem Flurförderzeug an ein weiteres Flurförderzeug, vorzugsweise drahtlos, und/oder an eine, vorzugsweise zentrale, Steuereinrichtung der Warenlogistikeinrichtung, vorzugsweise drahtlos, übermittelt werden, kann unter Verwendung der Daten der Flurförderzeug-Erweiterungszone beispielsweise ermittelt werden, ob die Gefahr bzw. Möglichkeit einer Kollision zwischen zwei Flurförderzeugen innerhalb eines Bereiches möglich ist. Hierdurch kann effizient eine mögliche Kollision frühzeitig erkannt und vermieden werden.

Dazu ist es bei einer Ausgestaltung des Verfahrens weiterhin vorgesehen, dass von einem zweiten Flurförderzeug Daten über die Flurförderzeug-Erweiterungszone des zweiten Flurförderzeugs an das Flurförderzeug, vorzugsweise drahtlos, übermittelt werden. Ins besondere werden die Daten über die jeweiligen Flurförderzeug-Erweiterungszonen zwischen zwei Flurförderzeugen ausgetauscht, wenn mittels einer Abstandssensoreinrichtung des Flurförderzeugs erfasst wird, dass sich ein zweites Flurförderzeug in einem vorbestimmten Bereich des Flurförderzeugs befindet, so dass nach Erkennung des zweiten Flurförderzeugs in einem vorbestimmten Abstand die Daten über die spezifische Flurförderzeug-Erweiterungszone zwischen den Flurförderzeugen ausgetauscht werden. Hierzu weisen die Flurförderzeuge jeweils entsprechende Sende- und Empfangseinheiten auf.

Beispielsweise weist die Abstandssensoreinrichtung des Flurförderzeugs einen Laser, einen Radarsensor oder einen Ultraschallsensor auf. Außerdem ist es in einer Ausgestaltung vorgesehen, den Abstand von zwei Flurförderzeugen unter Verwendung von, vorzugsweise ermittelbaren oder ermittelten, Ortsinformationen der beiden Flurförderzeuge zu bestimmen.

Überdies ist es bei einer Ausgestaltung des Verfahrens vorteilhaft, dass unter Verwendung der Daten der Flurförderzeug-Erweiterungszone des Flurförderzeugs und unter Verwendung der übermittelten Daten der Flurförderzeug-Erweiterungszone des zweiten Flurförderzeugs ermittelt wird, ob die Flurförderzeug-Erweiterungszone des Flurförderzeugs und die Flurförderzeug-Erweiterungszone des zweiten Flurförderzeugs sich teilweise überlappen oder berühren, wobei bei Feststellung einer teilweisen Überlappung oder Berührung der Flurförderzeug-Erweiterungszone und der zweiten Flurförderzeug-Erweiterungszone eine Warnmitteilung, insbesondere eine Kollisionswarnmitteilung, erzeugt wird und/oder das Flurförderzeug, vorzugsweise automatisch, gebremst wird und/oder das Flurförderzeug, vorzugsweise automatisch, gesteuert wird.

Dabei ist vorgesehen, dass die Bestimmung der Flurförderzeug-Erweiterungszone mittels eines bordeigenen Rechners des Flurförderzeugs bestimmt wird. Auch die Feststellung einer teilweisen Überlappung oder Berührung der Flurförderzeug-Erweiterungszone mit einer Flurförderzeug-Erweiterungszone eines zweiten Flurförderzeugs erfolgt mittels des bordeigenen Rechners des Flurförderzeugs.

Um eine mögliche Kollision, beispielsweise bei einer teilweisen Überlappung oder Berührung der Flurförderzeug-Erweiterungszone und der Flurförderzeug-Erweiterungszone des zweiten Fahrzeugs, dem Fahrer des Flurförderzeugs anzuzeigen, ist vorgesehen, dass die Warnmitteilung auf einem Display des Flurförderzeugs angezeigt wird und/oder die Warnmitteilung als ein akustisches und/oder mechanisches Warnsignal, vorzugsweise an oder auf dem Flurförderzeug, erzeugt wird.

Insbesondere wird das Verfahren mittels eines bordeigenen Rechners des Flurförderzeugs ausgeführt, wobei insbesondere die Bestimmung der Flurförderzeug-Erweiterungszone und/oder die Feststellung einer teilweisen Überlappung oder Berührung der Flurförderzeug-Erweiterungszone mit einer Flurförderzeug-Erweiterungszone eines zweiten Fahrzeugs und/oder die Erzeugung einer Warnmitteilung, insbesondere Kollisionswarnmitteilung, mittels des bordeigenen Rechners durchgeführt wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen, solange sie in den Schutzbereich der angehängten Ansprüche fallen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine vereinfachte Darstellung einer Warenlogistikeinrichtung mit einem Flurförderzeug;
- Fig. 2a: schematisch ein Flurförderzeug im Stillstand mit einer Erweiterungszone;
- Fig. 2b bis 2d: schematisch jeweils ein Flurförderzeug mit einer erfindungsgemäßen Erweiterungszone bei verschiedenen Geschwindigkeiten des Flurförderzeugs;
- Fig. 3a: schematisch ein Flurförderzeug ohne Anbauvorrichtung mit einer Konturzone;
- Fig. 3b: schematisch ein Flurförderzeug mit Anbauvorrichtung und erfindungsgemäßer Erweiterungszone.
- Fig. 3c: schematisch ein Flurförderzeug mit Erweiterungszone und Anbauvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

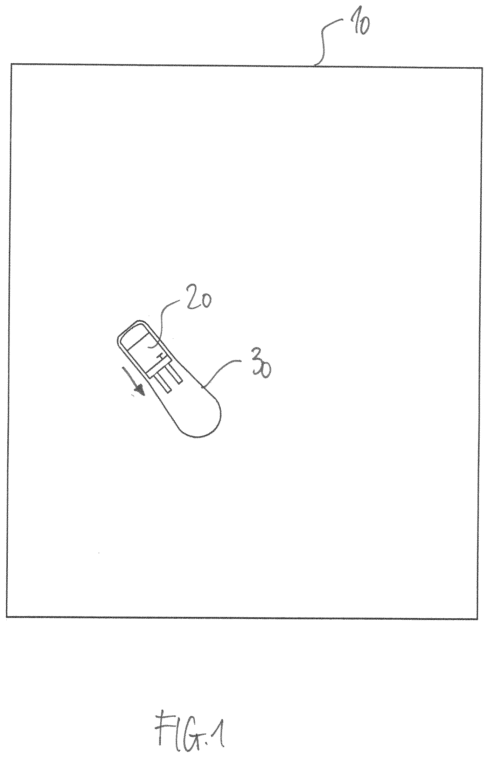

In Fig. 1 ist schematisch eine vereinfachte Darstellung einer Warenlogistikeinrichtung 10, beispielsweise in Ausgestaltung einer Lagerhalle oder dergleichen, gezeigt. Die Warenlogistikeinrichtung umfasst beispielsweise eine Lagerhalle, in der mehrere (hier nicht dargestellte) Regale nebeneinander angeordnet sind, wobei in den Regalen hierbei entsprechende Waren ein- oder ausgestapelt werden. In der Warenlogistikeinrichtung 10 sind hierbei mehrere Flurförderzeuge vorgesehen, so dass mittels der Flurförderzeuge die Waren in der Warenlogistikeinrichtung 10 transportiert werden.

In Fig. 1 ist schematisch beispielhaft ein Flurförderzeug 20 eingezeichnet, wobei das Flurförderzeug 20 innerhalb der Warenlogistikeinrichtung 10 bewegt wird.

Unter Verwendung von entsprechenden (hier nicht dargestellten) Sende- und Empfangseinrichtungen innerhalb der Warenlogistikeinrichtung 10 wird die Ausrichtung des Flurförderzeugs 20 mittels eines bordeigenen Rechners des Flurförderzeugs 20 ermittelt. Ferner wird auch die Geschwindigkeit des Flurförderzeugs 20 ermittelt. In Abhängigkeit der ermittelten absoluten Position und der ermittelten Fahrausrichtung des Flurförderzeugs 20 innerhalb der Warenlogistikeinrichtung 10 wird mittels eines bordeigenen Rechners des Flurförderzeugs 20 eine virtuelle Flurförderzeug-Erweiterungszone 30 bestimmt.

Die Erweiterungszone 30 ist hierbei unter Berücksichtigung der Fahrausrichtung bzw. der Orientierung des Flurförderzeugs 20 innerhalb der Warenlogistikeinrichtung 10 bestimmt. Die Erweiterungszone 30 ist in weiteren Ausgestaltungen in Abhängigkeit von Parametern, wie zum Beispiel der Geschwindigkeit, dem Lenkeinschlag oder weiteren Größen, veränderbar. Beispielsweise ist die Fläche der Erweiterungszonen 30 veränderbar durch die Fahrtrichtung oder die Änderung der Fahrtrichtung sowie durch einen Lenkanschlag und die Änderung der Geschwindigkeit.

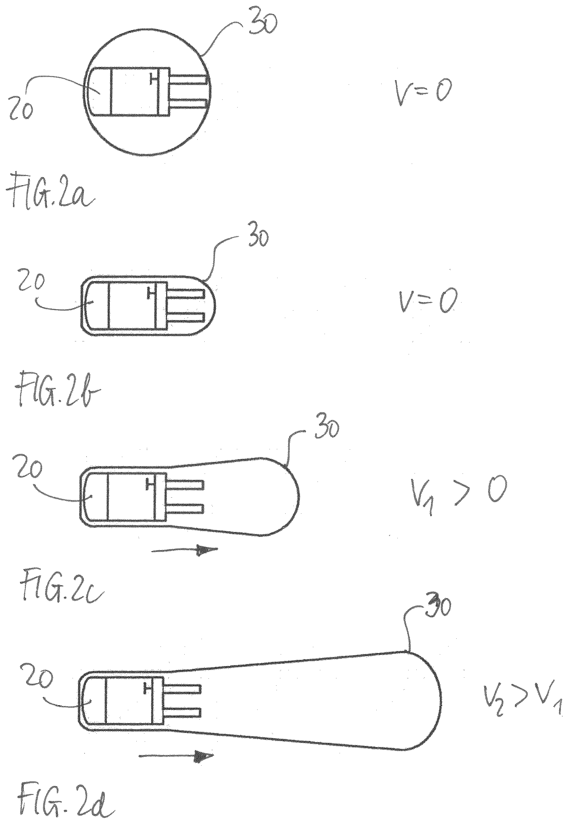

In Fig. 2a ist für ein Flurförderzeug 20 die Konturzone 30 eingezeichnet, bei der das Flurförderzeug 20 im Stillstand ist. Bei diesem Flurförderzeug 20 in Fig. 2a ist allerdings nicht die Fahrausrichtung innerhalb der Warenlogistikeinrichtung 10 bekannt oder bestimmt. Dadurch ergibt sich eine kreisförmige Erweiterungszone 30 um das Flurförderzeug 20 herum.

Im Gegensatz dazu ist in Fig. 2b ein Flurförderzeug 20 mit einer Erweiterungszone 30 gezeigt, wobei hierbei die Ausrichtung des Flurförderzeugs 30 innerhalb der Warenlogistikeinrichtung bekannt und berücksichtigt ist. Das Flurförderzeug 20 ist hierbei ebenfalls im Stillstand. Wie sich bei einem Vergleich mit Fig. 2a zeigt, ist die Erweiterungszone 30 enganliegend und weist eine kleinere Fläche auf im Vergleich zu dem Flurförderzeug 20 in Fig. 2a, bei dem keine Ausrichtung innerhalb der Warenlogistikeinrichtung bekannt oder ermittelt ist (vgl. Fig. 2a).

In Fig. 2c ist das Flurförderzeug 20 in Bewegung gezeigt, wobei in Fahrtrichtung des Flurförderzeugs die Erweiterungszone 30 nach Art einer Keule erweitert ist. Wird die Geschwindigkeit des Flurförderzeugs 20 weiter erhöht, vergrößert sich die Erweiterungszone 30, wie in Fig. 2d dargestellt.

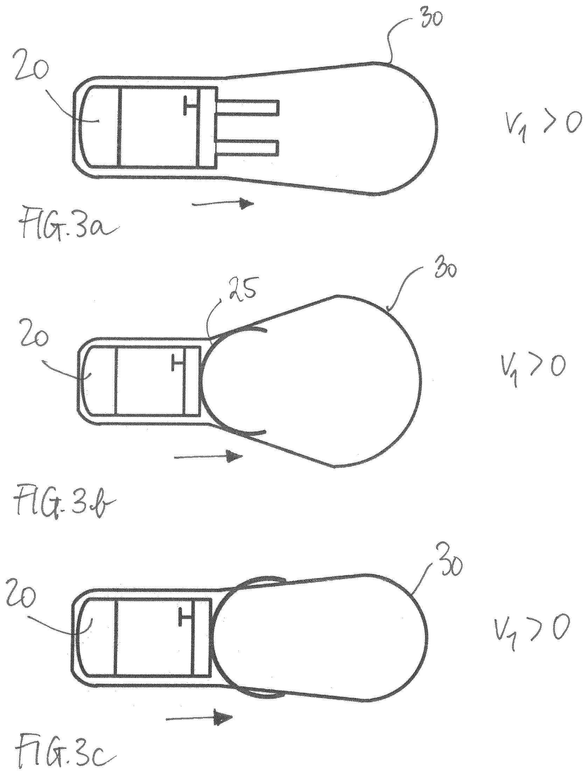

Das in Fig. 3a gezeigte Flurförderzeug 20 entspricht dem Flurförderzeug 20 aus Fig. 2c. Hierbei wird das Flurförderzeug 20 mit einer Geschwindigkeit größer als 0 m/s bewegt, wodurch die Erweiterungszone 30 in Fahrtrichtung des Flurförderzeugs 20 keulenartig erweitert und verbreitert ist. Bei der Bestimmung der Erweiterungszone 30 wird beispielsweise auch die Geometrie von Anbauvorrichtungen an ein Flurförderzeug 20 berücksichtigt.

In Fig. 3b ist ein Flurförderzeug 20 gezeigt, das einen Ballengreifer 25 anstatt einer Gabel (vgl. Fig. 3a) aufweist. Durch die Anordnung des Ballengreifers 25 wird die Fahrzeugkontur verändert, wobei bei der Bestimmung der Erweiterungszone 30 die Geometrie des Ballengreifers 25 berücksichtigt wird, wodurch die Erweiterungszone 30 in Fahrtrichtung eine größere Breite als bei einem Flurförderzeug 20 mit einer Gabel (vgl. Fig. 3a) aufweist.

Zum Vergleich dazu ist in Fig. 3c das Flurförderzeug 20 mit Ballengreifer 25 dargestellt, wobei in Fig. 3c die Erweiterungszone 30 dargestellt ist, wie sie für ein Flurförderzeug 20 mit einer Gabel (vgl. Fig. 3a) dargestellt ist. Hierbei ist die Erweiterungszone 30 nicht in Abhängigkeit zu der Geometrie des Ballengreifers 25 angepasst.

Gemäß der Erfindung werden bei der Bestimmung der dynamisch anpassbaren und/oder veränderbaren Flurförderzeug-Erweiterungszone 30 mehrere Parameter, wie zum Beispiel Anbauvorrichtungen sowie die Ladung der zu transportierenden oder transportierten Ware oder das Gewicht sowie weitere Parameter, in Ausgestaltungen berücksichtigt.

Erfindungsgemäße Ausführungsformen können durch einzelne Merkmale oder eine Kombination mehrerer Merkmale erfüllt sein, solange sie in den Schutzbereich der angehängten Ansprüche fallen.

Im Rahmen der Erfindung sind Merkmale, die mit "insbesondere" oder "vorzugsweise" gekennzeichnet sind, als fakultative Merkmale zu verstehen.

### Bezugszeichenliste

- 10: Warenlogistikeinrichtung
- 20: Flurförderzeug
- 25: Ballengreifer
- 30: Erweiterungszone

## Patentansprüche

1. Verfahren zum Betreiben eines Flurförderzeugs (20) in einer Warenlogistikeinrichtung (10), wobei die absolute Position des Flurförderzeugs (20) innerhalb der Warenlogistikeinrichtung (10) ermittelt wird oder ist und wobei die Fahrausrichtung des Flurförderzeugs (20) innerhalb der Warenlogistikeinrichtung (10) ermittelt wird oder ist, wobei in Abhängigkeit der ermittelten absoluten Position und der ermittelten Fahrausrichtung des Flurförderzeugs (20) innerhalb der Warenlogistikeinrichtung (10) eine dynamisch anpassbare und/oder veränderbare Flurförderzeug-Erweiterungszone (30), vorzugsweise in vorbestimmten Zeitdauern, bestimmt wird, **dadurch gekennzeichnet, dass** nach Bestimmung der Flurförderzeug-Erweiterungszone (30) Daten der Flurförderzeug-Erweiterungszone (30) von dem Flurförderzeug (20) an ein weiteres Flurförderzeug (20), vorzugsweise drahtlos, und/oder an eine, vorzugsweise zentrale, Steuereinrichtung der Warenlogistikeinrichtung (10), vorzugsweise drahtlos, übermittelt werden.

2. Verfahren nach Anspruch 1, **dadurch gekennzeichnet, dass** in Abhängigkeit der, vorzugsweise aktuellen, Fahrgeschwindigkeit des Flurförderzeugs (20) die Flurförderzeug-Erweiterungszone (30) bestimmt wird.

3. Verfahren nach Anspruch 1 oder 2, **dadurch gekennzeichnet, dass** in Abhängigkeit der Fahrtrichtung und/oder der Bewegungsbahn des Flurförderzeugs (20) die Flurförderzeug-Erweiterungszone (30) bestimmt wird.

4. Verfahren nach einem der Ansprüche 1 bis 3, **dadurch gekennzeichnet, dass** in Abhängigkeit des Fahrzeugtyps des Flurförderzeugs (20) die Flurförderzeug-Erweiterungszone (30) bestimmt wird.

5. Verfahren nach einem der Ansprüche 1 bis 4, **dadurch gekennzeichnet, dass** in Abhängigkeit der Fahrzeugeigenschaften des Flurförderzeugs (20) und/oder in Abhängigkeit von einer oder mehreren Eigenschaften von einer an das Flurförderzeug (20) angebauten Anbauvorrichtung (25) die Flurförderzeug-Erweiterungszone (30) bestimmt wird.

6. Verfahren nach einem der Ansprüche 1 bis 5, **dadurch gekennzeichnet, dass** in Abhängigkeit der Fahrqualifikation eines Fahrers des Flurförderzeugs (20) die Flurförderzeug-Erweiterungszone (30) bestimmt wird.

7. Verfahren nach einem der Ansprüche 1 bis 6, **dadurch gekennzeichnet, dass** in Abhängigkeit der Eigenschaften, insbesondere Typ und/oder Gewicht und/oder Größe, einer mittels des Flurförderzeugs (20) zu transportierenden oder transportierten Ware die Flurförderzeug-Erweiterungszone (30) bestimmt wird.

8. Verfahren nach einem der Ansprüche 1 bis 7, **dadurch gekennzeichnet, dass** in Abhängigkeit der Einsatzzeit des Flurförderzeugs (20) in der Warenlogistikeinrichtung (10) die Flurförderzeug-Erweiterungszone (30) bestimmt wird.

9. Verfahren nach einem der Ansprüche 1 bis 8, **dadurch gekennzeichnet, dass** in Abhängigkeit der für das Flurförderzeug (20) befahrbaren Umgebung der Warenlogistikeinrichtung (10) und/oder in Abhängigkeit der Verkehrsdichte von Flurförderzeugen (20) in einem Bereich der Warenlogistikeinrichtung (10) die Flurförderzeug-Erweiterungszone (30) bestimmt wird.

10. Verfahren nach einem der Ansprüche 1 bis 9, **dadurch gekennzeichnet, dass** in, vorzugsweise regelmäßigen, Zeitintervallen die absolute Position des Flurförderzeugs (20) innerhalb der Warenlogistikeinrichtung (10) und/oder die Fahrausrichtung des Flurförderzeugs (20) innerhalb der Warenlogistikeinrichtung (10) ermittelt und/oder überprüft wird.

11. Verfahren nach einem der Ansprüche 1 bis 10, **dadurch gekennzeichnet, dass** von einem zweiten Flurförderzeug (20) Daten über die Flurförderzeug-Erweiterungszone (30) des zweiten Flurförderzeugs (20) an das Flurförderzeug (20), vorzugsweise drahtlos, übermittelt werden.

12. Verfahren nach Anspruch 11, **dadurch gekennzeichnet, dass** unter Verwendung der Daten der Flurförderzeug-Erweiterungszone (30) des Flurförderzeugs (20) und unter Verwendung der Daten der Flurförderzeug-Erweiterungszone (30) des zweiten Flurförderzeugs (20) ermittelt wird, ob die Flurförderzeug-Erweiterungszone (30) des Flurförderzeugs (20) und die Flurförderzeug-Erweiterungszone (30) des zweiten Flurförderzeugs (20) sich teilweise überlappen oder berühren, wobei bei Feststellung einer teilweisen Überlappung oder Berührung der Flurförderzeug-Erweiterungszone (30) und der zweiten Flurförderzeug-Erweiterungszone (30) eine Warnmitteilung, insbesondere eine Kollisionswarnmitteilung, erzeugt wird und/oder das Flurförderzeug (20), vorzugsweise automatisch, gebremst wird und/oder das Flurförderzeug (20), vorzugsweise automatisch, gesteuert wird.

13. Verfahren nach Anspruch 12, **dadurch gekennzeichnet, dass** die Warnmitteilung auf einem Display des Flurförderzeugs (20) angezeigt wird und/oder die Warnmitteilung als ein akustisches und/oder mechanisches Warnsignal, vorzugsweise an oder auf dem Flurförderzeug (20), erzeugt wird.

14. Verfahren nach einem der Ansprüche 1 bis 13, **dadurch gekennzeichnet, dass** das Verfahren mittels eines bordeigenen Rechners des Flurförderzeugs (20) ausgeführt wird, wobei insbesondere die Bestimmung der Flurförderzeug-Erweiterungszone (30) und/oder die Feststellung einer teilweisen Überlappung der Flurförderzeug-Erweiterungszone (30) und/ oder die Erzeugung einer Kollisionswarnmitteilung mittels des bordeigenen Rechners durchgeführt wird.

## Claims

1. A method for operating an industrial truck (20) in a goods logistics facility (10), wherein the absolute position of the industrial truck (20) in the goods logistics facility (10) is or will be determined and the direction of travel of the industrial truck (20) in the goods logistics facility (10) is or will be determined, wherein a dynamically adaptable and/or modifiable industrial truck extension zone (30) is determined as a function of the absolute position determined and the direction of travel determined for the industrial truck (20) in the goods logistics facility (10), preferably at predetermined periods of time, **characterized in that** after determining the industrial truck extension zone (30), data for the industrial truck extension zone (30) are transmitted from the industrial truck (20) to another industrial truck (20), preferably wirelessly, and/or to a, preferably central, control device of the goods logistics facility (10), preferably wirelessly.

2. The method according to claim 1, **characterized in that** the industrial truck extension zone (30) is determined as a function of the, preferably current, travel speed of the industrial truck (20).

3. The method according to claim 1 or 2, **characterized in that** the industrial truck extension zone (30) is determined as a function of the direction of travel and/or the movement path of the industrial truck (20).

4. The method according to one of the claims 1 to 3, **characterized in that** the industrial truck extension zone (30) is determined as a function of the vehicle type of the industrial truck (20).

5. The method according to one of the claims 1 to 4, **characterized in that** the industrial truck extension zone (30) is determined as a function of the vehicle characteristics of the industrial truck (20) and/or as a function of one or more characteristics of an attached apparatus (25) attached to the industrial truck (20).

6. The method according to one of the claims 1 to 5, **characterized in that** the industrial truck extension zone (30) is determined as a function of the driving qualification of a driver of the industrial truck (20).

7. The method according to one of the claims 1 to 6, **characterized in that** the industrial truck extension zone (30) is determined as a function of the characteristics, in particular the type and/or weight and/or size, of goods transported or to be transported by means of the industrial truck (20).

8. The method according to one of the claims 1 to 7, **characterized in that** the industrial truck extension zone (30) is determined as a function of the operation time of the industrial truck (20) in the goods logistics facility (10).

9. The method according to one of the claims 1 to 8, **characterized in that** the industrial truck extension zone (30) is determined as a function of the environment of the goods logistics facility (10) drivable for the industrial truck (20) and/or as a function of the traffic density of industrial trucks (20) in an area of the goods logistics facility (10).

10. The method according to one of the claims 1 to 9, **characterized in that** the absolute position of the industrial truck (20) in the goods logistics facility (10) and/or the direction of travel of the industrial truck (20) in the goods logistics facility (10) is determined and/or checked at, preferably regular, time intervals.

11. The method according to one of the claims 1 to 10, **characterized in that** from a second industrial truck (20) data for the industrial truck extension zone (30) of the second industrial truck (20) are transmitted to the industrial truck (20), preferably wirelessly.

12. The method according to claim 11, **characterized in that** it is determined with the use of data for the industrial truck extension zone (30) of the industrial truck (20) and the use of data for the industrial truck extension zone (30) of the second industrial truck (20) whether the industrial truck extension zone (30) of the industrial truck (20) and the industrial truck extension zone (30) of the second industrial truck (20) partially overlap or touch one another, wherein upon determining a partial overlap or touching of the industrial truck extension zone (30) and the second industrial truck extension zone (30) a warning message, in particular a collision warning message, is generated and/or the industrial truck (20) is, preferably automatically, braked, and/or the industrial truck (20) is, preferably automatically, controlled.

13. The method according to claim 12, **characterized in that** the warning message is shown on a display of the industrial truck (20) and/or the warning message is generated as an acoustic and/or mechanical warning signal, preferably at or on the industrial truck (20).

14. The method according to one of the claims 1 to 13, **characterized in that** the method is carried out using an onboard computer of the industrial truck (20), wherein in particular the determination of the industrial truck extension zone (30) and/or the determination of a partial overlap of the industrial truck extension zone (30) and/or the generation of a collision warning message is performed using the onboard computer.

## Revendications

1. Procédé pour faire fonctionner un chariot de manutention (20) dans une installation logistique de marchandises (10), la position absolue du chariot de manutention (20) à l'intérieur de l'installation logistique de marchandises (10) étant déterminée ou apte à être déterminée et la direction de déplacement du chariot de manutention (20) à l'intérieur de l'installation logistique de marchandises (10) étant déterminée ou apte à être déterminée, une zone d'extension (30) de chariot de manutention adaptable et/ou modifiable de manière dynamique, de préférence pendant des durées prédéterminées, étant déterminée en fonction de la position absolue déterminée et de la direction de déplacement déterminée du chariot de manutention (20) à l'intérieur de l'installation logistique de marchandises (10), **caractérisé en ce qu'**après la détermination de la zone d'extension (30) de chariot de manutention, des données de la zone d'extension (30) de chariot de manutention sont transmises par le chariot de manutention (20) à un autre chariot de manutention (20), de préférence sans fil, et/ou à un dispositif de commande, de préférence central, de l'installation logistique de marchandises (10), de préférence sans fil.

2. Procédé selon la revendication 1, **caractérisé en ce que** la zone d'extension (30) du chariot de manutention est déterminée en fonction de la vitesse de déplacement, de préférence actuelle, du chariot de manutention (20).

3. Procédé selon la revendication 1 ou la revendication 2, **caractérisé en ce que** la zone d'extension (30) du chariot de manutention est déterminée en fonction du sens de déplacement et/ou de la direction de déplacement du chariot de manutention (20).

4. Procédé selon l'une des revendications 1 à 3, **caractérisé en ce que** la zone d'extension (30) du chariot de manutention est déterminée en fonction du type de véhicule du chariot de manutention (20).

5. Procédé selon l'une des revendications 1 à 4, **caractérisé en ce que** la zone d'extension (30) du chariot de manutention est déterminée en fonction des caractéristiques de véhicule du chariot de manutention (20) et/ou en fonction d'une ou plusieurs caractéristiques d'un dispositif de montage (25) monté sur le chariot de manutention (20).

6. Procédé selon l'une des revendications 1 à 5, **caractérisé en ce que** la zone d'extension (30) du chariot de manutention est déterminée en fonction de la qualification de conduite d'un conducteur du chariot de manutention (20).

7. Procédé selon l'une des revendications 1 à 6, **caractérisé en ce que** la zone d'extension (30) du chariot de manutention est déterminée en fonction des caractéristiques, notamment du type et/ou du poids et/ou de la taille, d'une marchandise à transporter ou transportée au moyen du chariot de manutention (20).

8. Procédé selon l'une des revendications 1 à 7, **caractérisé en ce que** l'on détermine la zone d'extension (30) du chariot de manutention en fonction du temps d'utilisation du chariot de manutention (20) dans l'installation logistique de marchandises (10).

9. Procédé selon l'une des revendications 1 à 8, **caractérisé en ce que** la zone d'extension (30) de chariot de manutention est déterminée en fonction de l'environnement de l'installation logistique de marchandises (10) dans lequel le chariot de manutention (20) est apte à circuler et/ou en fonction de la densité de circulation des chariots de manutention (20) dans une zone de l'installation logistique de marchandises (10).

10. Procédé selon l'une des revendications 1 à 9, **caractérisé en ce que**, à des intervalles de temps, de préférence réguliers, la position absolue du chariot de manutention (20) à l'intérieur de l'installation logistique de marchandises (10) et/ou la direction de déplacement du chariot de manutention (20) à l'intérieur de l'installation logistique de marchandises (10) sont déterminées et/ou vérifiées.

11. Procédé selon l'une des revendications 1 à 10, **caractérisé en ce que** des données sont transmises au chariot de manutention (20) par un deuxième chariot de manutention (20), de préférence sans fil, par l'intermédiaire de la zone d'extension (30) du deuxième chariot de manutention (20).

12. Procédé selon la revendication 11, **caractérisé en ce qu'**en utilisant les données de la zone d'extension (30) de chariot de manutention du chariot de manutention (20) et en utilisant les données de la zone d'extension (30) de chariot de manutention du deuxième chariot de manutention (20), on détermine si la zone d'extension (30) de chariot de manutention du chariot de manutention (20) et la zone d'extension (30) de chariot de manutention du deuxième chariot de manutention (20) se chevauchent partiellement ou sont en contact ; lorsqu'un chevauchement partiel ou un contact entre la zone d'extension (30) de chariot de manutention et la deuxième zone d'extension (30) de chariot de manutention est constaté, un message d'avertissement, notamment un message d'avertissement de collision, est généré et/ou le chariot de manutention (20) est freiné, de préférence automatiquement, et/ou le chariot de manutention (20) est commandé, de préférence automatiquement.

13. Procédé selon la revendication 12, **caractérisé en ce que** le message d'avertissement est affiché sur un écran du chariot de manutention (20) et/ou le message d'avertissement est généré sous la forme d'un signal d'avertissement acoustique et/ou mécanique, de préférence sur ou au niveau du chariot de manutention (20).

14. Procédé selon l'une des revendications 1 à 13, **caractérisé en ce que** le procédé est mis en oeuvre au moyen d'un ordinateur embarqué sur le chariot de manutention (20), la détermination de la zone d'extension du chariot de manutention (30) et/ou la détection d'un chevauchement partiel de la zone d'extension du chariot de manutention (30) et/ou la génération d'un message d'alerte de collision étant notamment réalisées au moyen de l'ordinateur embarqué.
